# EUROPEAN PATENT APPLICATION

(11) **EP 2 472 317 A1**
(43) Date of publication of application: **04.07.2012**
(21) Application number: 11010223.3
(22) Date of filing: 27.12.2011
(51) Int. Cl.: G03B 21/20, H04N 9/31

(54) **Light source device**

(30) Priority: 28.12.2010 JP 2010293261
(71) Applicant: JVC Kenwood Corporation, Yokohama-shi, Kanagawa 221-0022 (JP)
(72) Inventor: Kobayashi, Tatsuru, Yokohama-shi Kanagawa 221-022 (JP); Mukouyama, Tatsuya, Yokohama-shi Kanagawa 221-022 (JP); Tohda, Motoshi, Yokohama-shi Kanagawa 221-022 (JP)
(74) Representative: Wimmer, Hubert

(57) **Abstract**

A light source device includes excitation light sources integrated into a module and each emitting excitation light. A beam splitter optical system splits the excitation light from the excitation light sources into first, second, and third portions. A first fluorescent member emits red light in response to the first portion of the excitation light through fluorescence. A second fluorescent member emits green light in response to the second portion of the excitation light through fluorescence. A third fluorescent member emits blue light in response to the third portion of the excitation light through fluorescence. A combining optical system combines the red light, the green light, and the blue light.

## Description

### CROSS-REFERENCE TO RELATED APPLICATIONS

This application claims priority from Japanese patent application number 2010-293261, filed on December 28, 2010, the disclosure of which is hereby incorporated by reference.

### BACKGROUND OF THE INVENTION

### Field of the Invention

This invention relates to a light source device for illuminating a spatial light modulator or modulators in a projector. This invention also relates to a projector including a light source device.

### Description of the Related Art

A prior-art projector indicates an image through the use of a spatial light modulator such as a DMD (digital micromirror device). In the prior-art projector, the spatial light modulator is illuminated, and illumination light modulated by the spatial light modulator is projected to indicate the image.

Japanese patent application publication number 2010-086815 discloses a projector including a light source device for illuminating a spatial light modulator. The light source device has three excitation light sources, and three fluorescent layers excited by light beams from the excitation light sources to emit R (red) light, G (green) light, and B (blue) light respectively. The excitation light sources are lasers.

The light source device of Japanese application 2010-086815 has the following problems. The three excitation light sources are used for the three fluorescent layers, respectively. Thus, differences in brightness among the excitation light sources cause those among the fluorescent layers which impair color balance among R, G, and B of illumination light.

Since cooling conditions vary from position to position within a casing of the projector, the efficiencies of cooling of the three excitation light sources are different from each other. The life of each of the excitation light sources depends on the efficiency of cooling thereof. Thus, the brightnesses of the excitation light sources are reduced at different rates as they age. Accordingly, there occur greater differences in brightness among the excitation light sources as they age. As previously mentioned, such differences in brightness among the excitation light sources cause those among the fluorescent layers which impair color balance among R, G, and B of illumination light.

### SUMMARY OF THE INVENTION

It is an object of this invention to provide a light source device able to maintain good color balance among R, G, and B of illumination light independently of differences in brightness among excitation light sources and ages thereof.

It is another object of this invention to provide a projector including such a light source device.

A first aspect of this invention provides a light source device comprising excitation light sources integrated into a module and each emitting excitation light; a beam splitter optical system splitting the excitation light from the excitation light sources into first, second, and third portions at a prescribed split ratio; a first fluorescent member emitting red light in response to the first portion of the excitation light from the beam splitter optical system through fluorescence; a second fluorescent member emitting green light in response to the second portion of the excitation light from the beam splitter optical system through fluorescence; a third fluorescent member emitting blue light in response to the third portion of the excitation light from the beam splitter optical system through fluorescence; and a combining optical system combining the red light, the green light, and the blue light from the first, second, and third fluorescent members.

A second aspect of this invention is based on the first aspect thereof, and provides a light source device wherein the lengths of optical paths between an exit of the combining optical system and the first, second, and third fluorescent members are equal to each other.

A third aspect of this invention provides a light source device comprising excitation light sources integrated into a module and each emitting excitation light having a blue color; a beam splitter optical system splitting the excitation light from the excitation light sources into first, second, and third portions at a prescribed split ratio; a first fluorescent member emitting red light in response to the first portion of the excitation light from the beam splitter optical system through fluorescence; a second fluorescent member emitting green light in response to the second portion of the excitation light from the beam splitter optical system through fluorescence; a diffuser diffusing and transmitting the third portion of the excitation light from the beam splitter optical system to output blue light; and a combining optical system combining the red light and the green light from the first and second fluorescent members, and the blue light from the diffuser.

A fourth aspect of this invention is based on the third aspect thereof, and provides a light source device wherein the combining optical system adds blue components of light emitted from the second fluorescent member to the combining-resultant light.

A fifth aspect of this invention provides a projector comprising at least one spatial light modulator, and a light source device illuminating the spatial light modulator. The light source device comprises excitation light sources integrated into a module and each emitting excitation light having a blue color; a beam splitter optical system splitting the excitation light from the excitation light sources into first, second, and third portions at a prescribed split ratio; a first fluorescent member emitting red light in response to the first portion of the excitation light from the beam splitter optical system through fluorescence; a second fluorescent member emitting green light in response to the second portion of the excitation light from the beam splitter optical system through fluorescence; a diffuser diffusing and transmitting the third portion of the excitation light from the beam splitter optical system to output blue light; and a combining optical system combining the red light and the green light from the first and second fluorescent members, and the blue light from the diffuser.

This invention has advantages as follows. Good color balance among R, G, and B of illumination light is maintained independently of differences in brightness among excitation light sources and ages thereof.

In the light source device of the first aspect of this invention, a variation in brightness among excitation light sources hardly causes a variation in brightness among red, green, and blue light beams emitted from fluorescent members in response to excitation light beams.

In the light source device of the second aspect of this invention, outgoing red, green, and blue light beams are equal in angular distribution. It is possible to maintain good color balance.

In the light source device of the third aspect of this invention, a high color purity of blue light can be attained.

In the light source device of the fourth aspect of this invention, the chromaticity of blue light can be adjusted.

### BRIEF DESCRIPTION OF THE DRAWINGS

Fig. 1 is a sectional diagram of a light source device according to a first embodiment of this invention.
Fig. 2(a) is a diagram of the spectral characteristics of a first mirror in the light source device of Fig. 1.
Fig. 2(b) is a diagram of the spectral characteristics of a second mirror in the light source device of Fig. 1.
Fig. 2(c) is a diagram of the spectrums of R, G, and B light beams emitted from fluorescent members and excitation light emitted from laser diodes in the light source device of Fig. 1.
Fig. 3(a) is a diagram of the spectral characteristics of a third mirror in the light source device of Fig. 1.
Fig. 3(b) is a diagram of the spectral characteristics of a fourth mirror in the light source device of Fig. 1.
Fig. 3(c) is a diagram of the chromaticities of various light beams including a light beam outputted from the light source device of Fig. 1.
Fig. 4(a) is a front view of an arrangement of lenses and a heat sink in the light source device of Fig. 1.
Fig. 4(b) is a sectional diagram of the arrangement in Fig. 4(a).
Fig. 5 is a sectional diagram of a light source device according to a second embodiment of this invention.
Fig. 6 is a perspective diagram of a laser diode and an excitation light beam emitted therefrom in the light source device of Fig. 5.
Fig. 7(a) is a sectional diagram of an arrangement of collimated excitation light beams taken along an AA plane in Fig. 5.
Fig. 7(b) is a sectional diagram of an arrangement of collimated excitation light beams taken along a BB plane in Fig. 5.
Fig. 8(a) is a diagram of a light spot with a diameter of 0.5 mm and a light intensity distribution on a fluorescent member in the light source device of Fig. 5.
Fig. 8(b) is a diagram of a light spot with a diameter of 1.6 mm and a light intensity distribution on a fluorescent member in the light source device of Fig. 5.
Fig. 9(a) is a diagram of the spectrums of R, G, and B light beams in the light source device of Fig. 5.
Fig. 9(b) is a diagram of the spectral characteristics of a third mirror in the light source device of Fig. 5.
Fig. 9(c) is a diagram of the spectral characteristics of a fourth mirror in the light source device of Fig. 5.
Fig. 9(d) is a diagram of the spectrum of a light beam outputted from the light source device of Fig. 5.
Fig. 9(e) is a diagram of the spectral characteristics of a third mirror in a light source device according to a third embodiment of this invention.
Fig. 9(f) is a diagram of the spectral characteristics of a fourth mirror in the third embodiment of this invention.
Fig. 9(g) is a diagram of the spectrum of a light beam outputted from the light source device in the third embodiment of this invention.
Fig. 10 is a sectional diagram of a projector according to a fourth embodiment of this invention.
Fig. 11 is a sectional diagram of a prior-art light source device.

### DETAILED DESCRIPTION OF THE INVENTION

A prior-art light source device will be explained below for a better understanding of this invention.

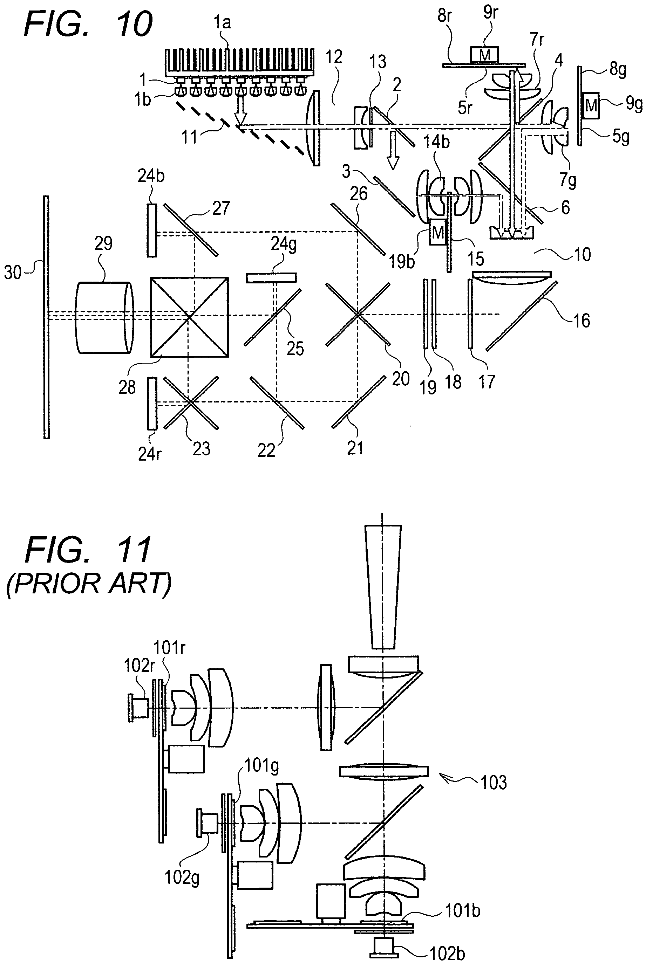

Fig. 11 shows a prior-art light source device disclosed in Japanese patent application publication number 2010-086815. The prior-art device of Fig. 11 includes fluorescent layers 101r, 101g, and 101b for emitting R light, G light, and B light respectively, and excitation light sources 102r, 102g, and 102b for applying excitation light beams to the fluorescent layers 101r, 101g, and 101b respectively. The excitation light sources 102r, 102g, and 102b are, for example, lasers.

The fluorescent layer 101r is excited by light applied from the excitation light source 102r to emit R light. The fluorescent layer 101g is excited by light applied from the excitation light source 102g to emit G light. The fluorescent layer 101 b is excited by light applied from the excitation light source 102b to emit B light. An optical system 103 combines the emitted R light, the emitted G light, and the emitted B light into illumination light for illuminating a spatial light modulator.

In the prior-art device of Fig. 11, the fluorescent layers 101r, 101g, and 101b are provided on wheels respectively, and the wheels are rotated to enhance the efficiencies of cooling of the fluorescent layers 101r, 101g, and 101b.

The prior-art device of Fig. 11 has the previously-mentioned problems. This invention can solve these problems.

### First Embodiment

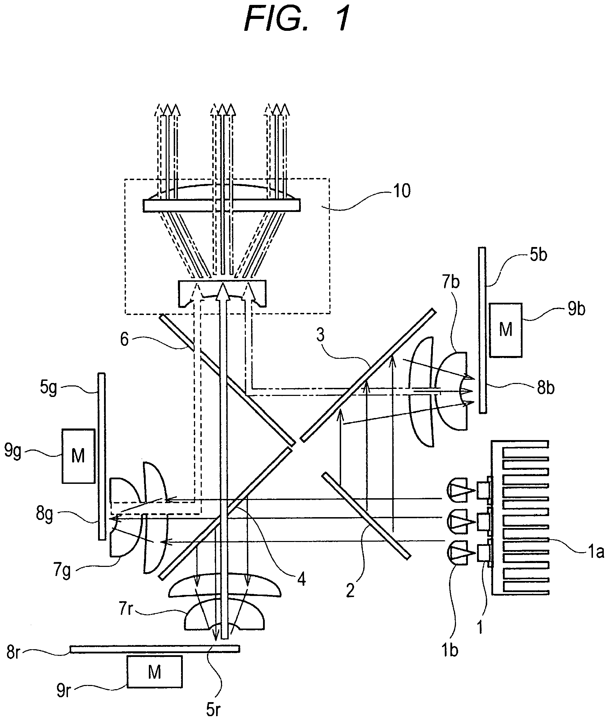

Fig. 1 shows a light source device according to a first embodiment of this invention. The light source device of Fig. 1 includes an array or arrangement of laser diodes (LDs) 1 mounted on a heat sink 1a. The LDs 1 emit near-ultraviolet excitation light beams respectively. The emitted excitation light beams have a single wavelength. Preferably, the LDs 1 and the heat sink 1a are integrated or combined into a module.

Lenses 1b follow the LDs 1 respectively as viewed in the direction of travel of light. The lenses 1b align with the LDs 1 respectively. The lenses 1b receive the excitation light beams from the LDs 1, and convert or collimate them into parallel excitation light beams (collimated excitation light beams) respectively. The lenses 1b, the LDs 1, and the heat sink 1a may be integrated or combined into a module.

A first mirror or beam splitter 2 follows the lenses 1b as viewed in the direction of travel of light. The first mirror 2 receives the parallel excitation light from the lenses 1b, and splits the received parallel excitation light into a first portion directed toward a second mirror 3 and a second portion directed toward a third mirror 4 at a prescribed split ratio.

The first portion of the parallel excitation light from the first mirror 2 is reflected by the second mirror 3 toward a fluorescent member 5b for B (blue) light. Preferably, the fluorescent member 5b is in the form of a layer.

The third mirror 4 includes a beam splitter. The third mirror 4 splits the second portion of the parallel excitation light from the first mirror 2 into a third portion directed toward a fluorescent member 5g for G (green) light and a fourth portion directed toward a fluorescent member 5r for R (red) light at a prescribed split ratio. Preferably, each of the fluorescent members 5r is in the form of a layer.

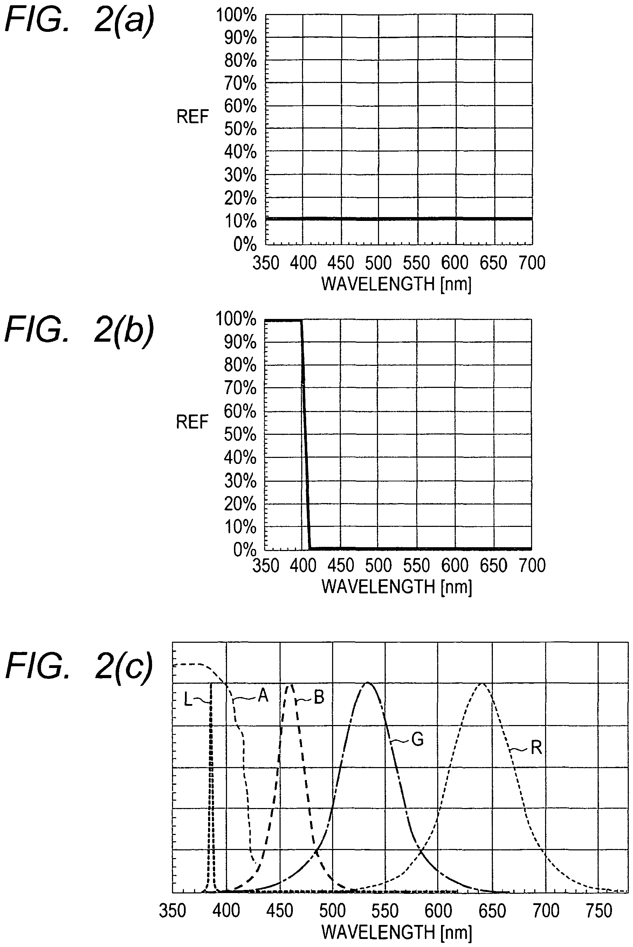

As shown in Fig. 2(a), the first mirror 2 has a reflectance of 12% independent of the wavelength of incident light. Thus, the first mirror 2 reflects 12% of the parallel excitation light from the lenses 1b, and thereby generates the first portion of the parallel excitation light directed toward the second mirror 3. The first mirror 2 transmits 88% of the parallel excitation light from the lenses 1b, and thereby generates the second portion of the parallel excitation light directed toward the third mirror 4.

As shown in Fig. 2(b), the second mirror 3 has a reflectance depending on the wavelength of incident light. Specifically, the reflectance of the second mirror 3 is about 100% for incident light having a wavelength in the ultraviolet range inclusive of the near-ultraviolet range, and is about 0% for incident light having a wavelength longer than that in the ultraviolet range. Thus, the second mirror 3 fully reflects the first portion of the parallel excitation light toward the fluorescent member 5b.

A first lens 7b is located between the second mirror 3 and the fluorescent member 5b in a direction of travel of light. The reflected excitation light from the second mirror 3 passes through the first lens 7b before reaching the fluorescent member 5b. The first lens 7b focuses the reflected excitation light onto the fluorescent member 5b.

A circular substrate 8b made of metal or glass has a major surface coated with a highly-efficient reflective film. The fluorescent member 5b is formed by a layer securely superposed on the reflective film on the substrate 8b. Preferably, during manufacture, a mixture of base material for the fluorescent member 5b and adhesive dispersant (binder) is applied to the reflective film before the fluorescent member 5b is formed thereon. A motor 9b rotates the substrate 8b about its axis at a speed of, for example, 7200 rpm. The fluorescent member 5b is excited by the excitation light focused thereon, and thereby emits a fluorescent light beam that is a blue (B) light beam toward the first lens 7b.

With reference to Fig. 2(c), the excitation light focused onto the fluorescent member 5b has a spectrum "L", and the blue light beam emitted therefrom has a spectrum "B".

The blue light beam from the fluorescent member 5b is incident to the first lens 7b, and passes therethrough while being converted into a parallel blue light beam. Then, the parallel blue light beam travels from the first lens 7b to the second mirror 3. As shown in Fig. 2(b), the reflectance of the second mirror 3 is about 0% for incident light having a wavelength in the blue (B) range. Thus, the blue light beam passes through the second mirror 3 before being incident to a fourth mirror 6 forming a combining optical system.

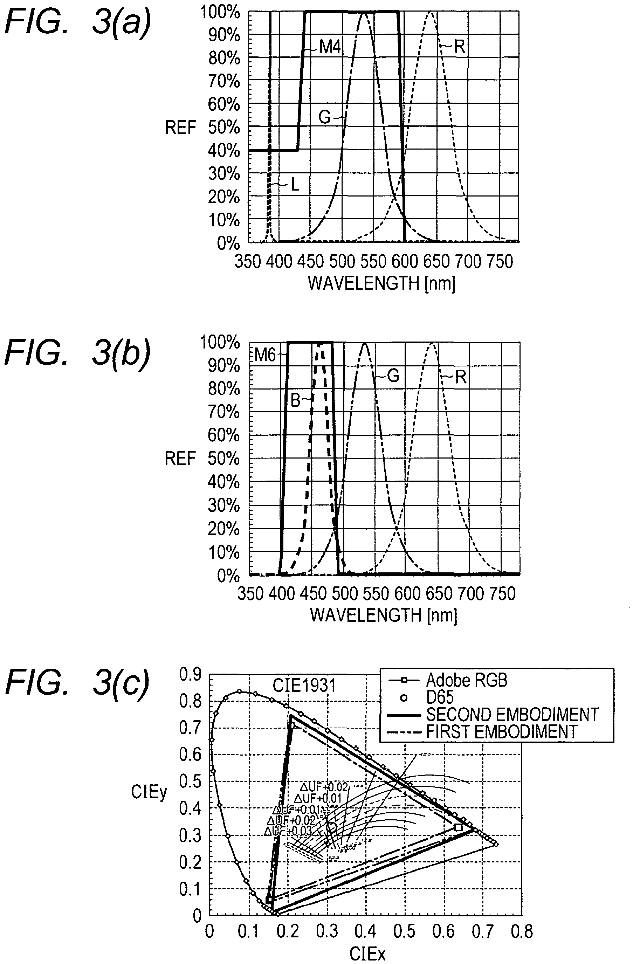

As denoted by the solid line M4 in Fig. 3(a), the third mirror 4 has a reflectance depending on the wavelength of incident light. Specifically, the reflectance of the third mirror 4 is about 40% for incident light having a wavelength in the ultraviolet range inclusive of the near-ultraviolet range. Thus, the third mirror 4 transmits about 60% of the parallel excitation light from the first mirror 2, and thereby generates transmitted excitation light directed toward the fluorescent member 5g. The third mirror 4 reflects about 40% of the parallel excitation light from the first mirror 2, and thereby generates reflected excitation light directed toward the fluorescent member 5r.

A second lens 7g is located between the third mirror 4 and the fluorescent member 5g in a direction of travel of light. The transmitted excitation light from the third mirror 4 passes through the second lens 7g before reaching the fluorescent member 5g. The second lens 7g focuses the transmitted excitation light onto the fluorescent member 5g.

A circular substrate 8g made of metal or glass has a major surface coated with a highly-efficient reflective film. The fluorescent member 5g is formed by a layer securely superposed on the reflective film on the substrate 8g. Preferably, during manufacture, a mixture of base material for the fluorescent member 5g and adhesive dispersant is applied to the reflective film before the fluorescent member 5g is formed thereon. A motor 9g rotates the substrate 8g about its axis at a speed of, for example, 7200 rpm. The fluorescent member 5g is excited by the excitation light beam focused thereon, and thereby emits a fluorescent light beam that is a green (G) light beam toward the second lens 7g. The green light beam has a spectrum "G" in Fig. 2(c).

The green light beam from the fluorescent member 5g is incident to the second lens 7g, and passes therethrough while being converted into a parallel green light beam. Then, the parallel green light beam from the second lens 7g is incident to the third mirror 4.

As shown in Fig. 3(a), the reflectance of the third mirror 4 is about 100% for incident light having a wavelength in the green (G) range. Thus, the third mirror 4 fully reflects the green light beam toward the fourth mirror 6. The reflected green light beam is incident to the fourth mirror 6.

A third lens 7r is located between the third mirror 4 and the fluorescent member 5r in a direction of travel of light. The reflected excitation light from the third mirror 4 passes through the third lens 7r before reaching the fluorescent member 5r. The third lens 7r focuses the reflected excitation light onto the fluorescent member 5r.

A circular substrate 8r made of metal or glass has a major surface coated with a highly-efficient reflective film. The fluorescent member 5r is formed by a layer securely superposed on the reflective film on the substrate 8r. Preferably, during manufacture, a mixture of base material for the fluorescent member 5r and adhesive dispersant is applied to the reflective film before the fluorescent member 5r is formed thereon. A motor 9r rotates the substrate 8r about its axis at a speed of, for example, 7200 rpm. The fluorescent member 5r is excited by the excitation light focused thereon, thereby emits a fluorescent light beam that is a red (R) light beam toward the third lens 7r. The red light beam has a spectrum "R" in Fig. 2(c).

The red light beam from the fluorescent member 5r is incident to the third lens 7r, and passes therethrough while being converted into a parallel red light beam. Then, the parallel red light beam from the third lens 7r is incident to the third mirror 4.

As shown in Fig. 3(a), the reflectance of the third mirror 4 is about 0% for incident light having a wavelength in the red (R) range. Thus, the third mirror 4 fully transmits the red light beam. Then, the transmitted red light beam travels from the third mirror 4 to the fourth mirror 6.

It should be noted that the broken lines in Fig. 3(a) denote the spectrums "R", "G", and "L" same as those in Fig. 2(c) for reference purposes.

As denoted by the solid line M6 in Fig. 3(b), the fourth mirror 6 has a reflectance depending on the wavelength of incident light. In Fig. 3(b), the broken lines denote the spectrums "R", "G", and "B" same as those in Fig. 2(c). The reflectance of the fourth mirror 6 is about 100% for incident light having a wavelength in the blue (B) range. Thus, the fourth mirror 6 fully reflects the blue light beam from the second mirror 3. The reflectance of the fourth mirror 6 is about 0% for incident light having a wavelength in the red (R) and green (G) ranges. Thus, the fourth mirror 6 fully transmits the red light beam and the green light beam from the third mirror 4. The fourth mirror 6 combines the red, green, and blue light beams into a composite light beam which is a collimated or parallel white light beam. The fourth mirror 6 has an incident surface and an exit surface (an input surface and an output surface). The composite light beam leaves the exit surface of the fourth mirror 6. In this way, the composite light beam is outputted from the fourth mirror 6.

With reference to Fig. 3(c), the composite light beam in the first embodiment of this invention has a prescribed chromaticity range, a white balance of 6500 K, and a deviation of +0.001. The composite light beam is wide in chromaticity range and good in white balance.

The lenses 7b, 7g, and 7r, the mirrors 3 and 4, and the fluorescent members 5b, 5g, and 5r are located and arranged so that the lengths of optical paths between the exit surface of the fourth mirror 6 (the combining optical system) and the light emission points on the fluorescent members 5b, 5g, and 5r will be equal to each other. The lenses 7b, 7g, and 7r are of the same structure. Thus, the conjugate lengths (points) for the blue, green, and red light beams are equal to each other. Therefore, concerning the blue, green, and red light beams, not only the optical path lengths but also the angular distributions are equal to each other. Accordingly, the color balance can be properly maintained.

The composite light beam travels from the fourth mirror 6 to an afocal lens system 10. The composite light beam is increased in cross-sectional diameter by the afocal lens system 10 before being incident to a spatial light modulator or modulators in a projector (not shown in Fig. 1).

Preferably, each of the fluorescent members 5b, 5g, and 5r on the substrates 8b, 8g, and 8r is fabricated on a mass-projection basis. For example, during the fabrication with the same lot number, a great amount of a mixture of fluorescent material and binder is prepared while the fluorescent material is dispersed in the binder. Then, portions of the mixture are applied to substrates respectively. Thus, concerning each of the fluorescent members 5b, 5g, and 5r, a variation in light emission from member to member is thought to be small for the same lot number. Specifically, a variation in light emission efficiency or emitted light spectrum from member to member is thought to be small for the same lot number. Therefore, concerning each of blue, green, and red, the chromaticity range in Fig. 3(c) for this invention hardly varies from member to member for the same lot number.

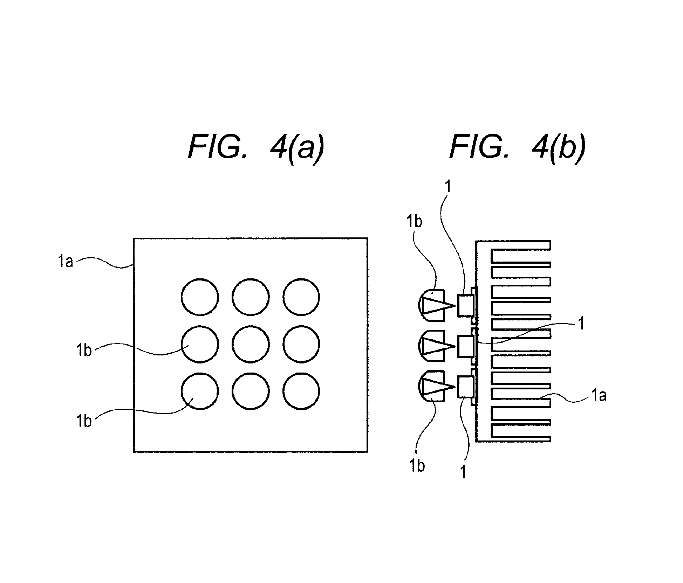

As shown in Figs. 4(a) and 4(b), the number of the LDs 1 is 9, and the LDs 1 are in a 3-by-3 array mounted on the heat sink 1a. Preferably, the LDs 1 are combined into a module with the heat sink 1a.

Generally, for several tens of laser diodes, a variation in emitted light power from diode to diode is about +7%. A typical fluorescent member relates to an absorption spectrum such as denoted by "A" in Fig. 2(c). It is thought that the fluorescent member efficiently emits fluorescent light in response to excitation light when the wavelength of the excitation light resides in a high-absorption-rate range in the absorption spectrum. Even if the wavelength of the excitation light varies within the high-absorption-rate range, the shape of the spectrum of the emitted fluorescent light remains unchanged. A variation in the efficiency of emission of the excitation light does not affect the chromaticity of the fluorescent light but causes a change in the brightness or intensity thereof.

In the case where the LDs 1 are in a module and the excitation light from the array of the LDs 1 is split into three portions applied to the fluorescent members 5r, 5g, and 5b as explained above, a variation in emitted light brightness among the LDs 1 affects the brightness of the fluorescent light from each of the fluorescent members 5r, 5g, and 5b only. Specifically, the excitation light from the array of the LDs 1 is distributed among the fluorescent members 5r, 5g, and 5b via the reflectance-adjusted mirrors 2, 3, and 4 so that a variation in emitted light brightness among the LDs 1 cause neither a variation in brightness among the red, green, and blue light beams from the fluorescent members 5r, 5g, and 5b nor an imbalance among red, green, and blue.

The first, second, and third mirrors 2, 3, and 4 are designed for the parallel excitation light having a single wavelength. Accordingly, the reflectance and transmittance of the mirrors 2, 3, and 4 can be precisely adjusted in accordance with film making conditions during the fabrication thereof. Thus, regarding each of the mirrors 2, 3, and 4, it is possible to adequately suppress a variation in characteristics from mirror to mirror.

### Second Embodiment

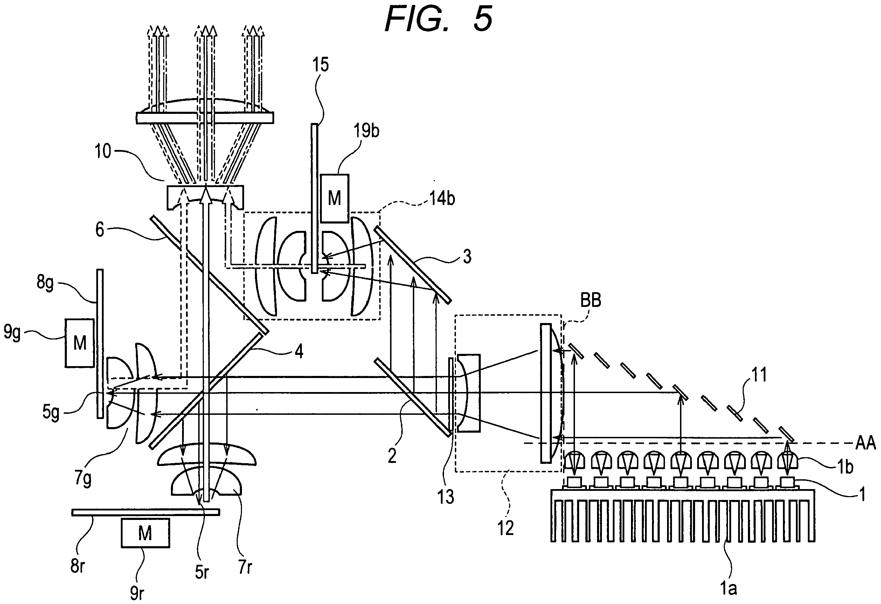

Fig. 5 shows a light source device according to a second embodiment of this invention. The light source device of Fig. 5 includes an array or arrangement of laser diodes (LDs) 1 mounted on a heat sink 1a. The LDs 1 emit excitation light beams respectively. Each of the emitted excitation light beams has a power of 1.4 W and a wavelength in the range of 430 nm to 460 nm, that is, a blue-range wavelength. The number of the LDs 1 is, for example, 50. Preferably, the LDs 1 and the heat sink 1a are integrated or combined into a module.

Lenses 1b follow the LDs 1 respectively as viewed in the direction of travel of light. The lenses 1b align with the LDs 1 respectively. The lenses 1b receive the excitation light beams from the LDs 1, and convert or collimate them into parallel excitation light beams (collimated excitation light beams) respectively. The lenses 1b, the LDs 1, and the heat sink 1a may be integrated or combined into a module.

Strip-shaped mirrors 11 follow the lenses 1b respectively as viewed in the direction of travel of light. The mirrors 11 align with the lenses 1b respectively. The mirrors 11 receive the parallel excitation light beams from the lenses 1b, and reflect them in a manner such that optical paths are bent at an angle of 90 degrees.

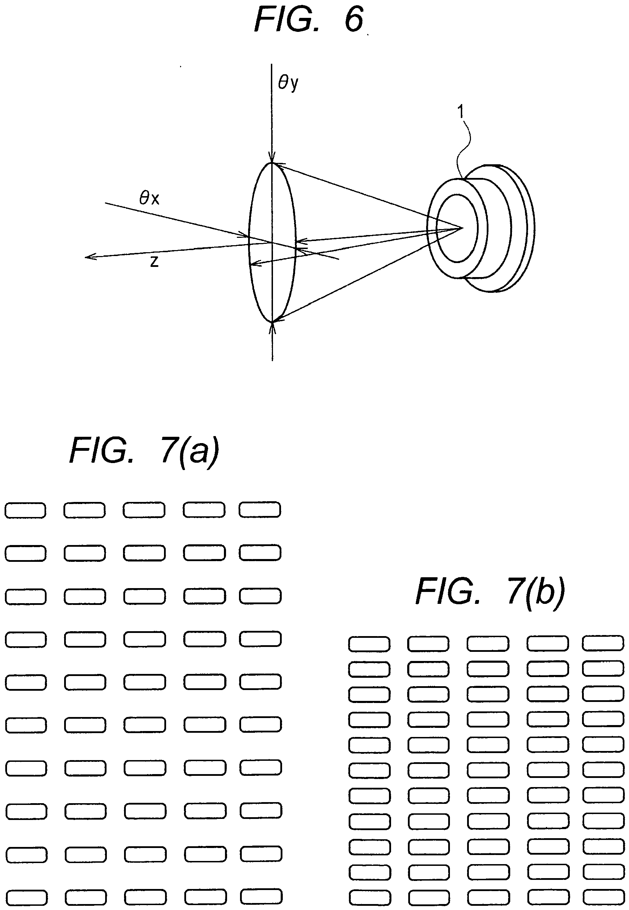

As shown in Fig. 6, each of the excitation light beams from the LDs 1 has an elliptic cross-section. Specifically, when the optical axis of the LD 1 is taken as the "z" axis of coordinates, the diffusion angle θy of the excitation light beam in a "y-z" plane differs from the diffusion angle θx thereof in an "x-z" plane.

The LDs 1 are positioned so that the major axes ("y" axis in Fig. 6) of the elliptic cross-section of the excitation light beams from the LDs 1 will be parallel with the normal with respect to Fig. 5. The LDs 1 are in a 5-by-10 array and the lenses 1b are in a corresponding array so that on the sectional plane AA in Fig. 5, the cross sections of the collimated excitation light beams from the lenses 1b are two-dimensionally arranged as shown in Fig. 7(a). The mirrors 11 are inclined at an angle of 45 degrees with respect to the optical axes of the lenses 1b. The mirrors 11 are spaced at equal intervals such that on the sectional plane BB in Fig. 5, the cross sections of the reflected excitation light beams from the mirrors 11 are two-dimensionally arranged as shown in Fig. 7(b). The cross sections of the reflected excitation light beams from the mirrors 11 on the sectional plane BB in Fig. 5 are in an area narrower than the area on the sectional plane AA in Fig. 5 which contains the cross sections of the collimated excitation light beams from the lenses 1b.

To enhance cooling efficiency, it is preferable that the LDs 1 on the heat sink 1a are spaced at relatively great intervals. To reduce the size of the light source device and enhance the efficiency of thereof, it is preferable to arrange the LDs 1 in a narrow area on the heat sink 1a.

Each of the mirrors 11 includes a metal mirror such as an Ag mirror having a high reflectance. The directions of polarization of the excited light beams from the LDs 1 are equal. Accordingly, each of the mirrors 11 may include a dielectric mirror with a high reflection efficiency.

The reflected excitation light beams travel from the mirrors 11 to an afocal lens system 12 before passing therethrough. The cross-sectional area of a bundle of the excitation light beams is decreased by the afocal lens system 12. It should be noted that an afocal lens system has an infinite effective focal length and functions to change the cross-sectional area of an incident parallel light beam. The excitation light which leaves the afocal lens system 12 is of the parallel or collimated type.

The excitation light passes through a diffuser 13 after leaving the afocal lens system 12. The diffuser 13 controls the diameter of spots on fluorescent members 5r and 5g into which portions of the excitation light are focused respectively. The diffuser 13 is designed to diffuse a well-straight incident light beam at a proper angle.

During manufacture, each of the fluorescent members 5r and 5g is made from a mixture of base material for the fluorescent member 5r or 5g and adhesive dispersant (binder). For the fluorescent members 5r and 5g, it is preferable to choose adhesive dispersant excellent in heat-resisting property, high in thermal conductivity, and good in transparency. More preferably, silicone adhesive is used as adhesive dispersant. Silicone-based material resists a temperature up to about 300° C.

The diffuser 13 provides an increased diameter of spots on fluorescent members 5r and 5g into which portions of the excitation light are focused respectively. The increase in the spot diameter is chosen so that the spots will heat the fluorescent members 5r and 5g to a temperature lower than the highest temperature they can resist, and that the efficiency of use of light will not decrease.

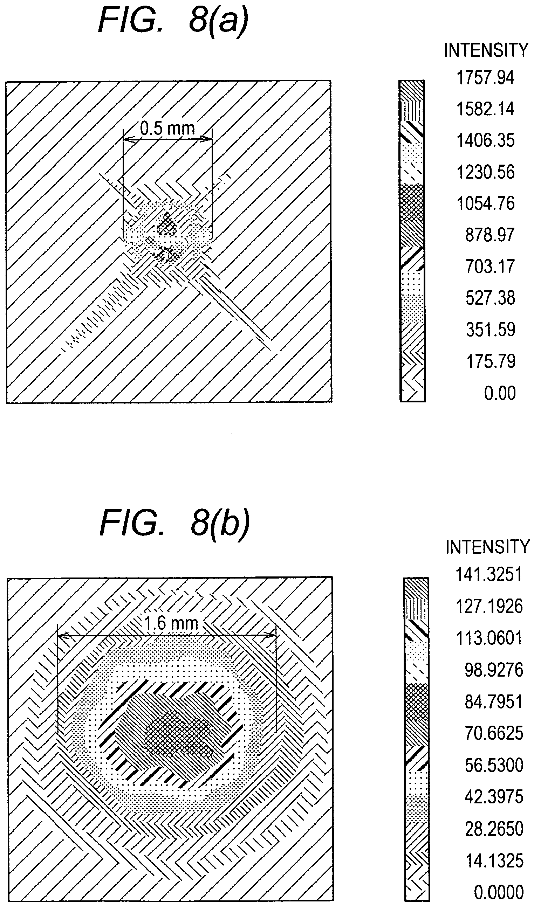

Fig. 8(a) shows a light intensity distribution on each of the fluorescent members 5r and 5g which occurs when the diffuser 13 is absent and the excitation light is focused into a spot with a diameter of 0.5 mm on the fluorescent member 5r or 5g. Fig. 8(b) shows a light intensity distribution on each of the fluorescent members 5r and 5g which occurs when the diffuser 13 is present and the excitation light is focused into a spot with a diameter of 1.6 mm on the fluorescent member 5r or 5g. As understood from comparison between Figs. 8(a) and 8(b), the diffuser 13 reduces the peak light intensity by one order.

A first mirror or beam splitter 2 follows the diffuser 13 as viewed in the direction of travel of light. The first mirror 2 receives the parallel excitation light from the diffuser 13, and splits the received parallel excitation light into a first portion directed toward a second mirror 3 and a second portion directed toward a third mirror 4 at a prescribed split ratio.

The first portion of the parallel excitation light from the first mirror 2 is reflected by the second mirror 3 toward a lens set 14b before being incident to the lens set 14b. A disk-shaped diffuser 15 extends into the lens set 14b.

The third mirror 4 includes a beam splitter. The third mirror 4 splits the second portion of the parallel excitation light from the first mirror 2 into a third portion directed toward a fluorescent member 5g for G (green) light and a fourth portion directed toward a fluorescent member 5r for R (red) light at a prescribed split ratio. Preferably, each of the fluorescent members 5r is in the form of a layer.

The first mirror 2 reflects, for example, 12% of the parallel excitation light from the diffuser 13, and thereby generates the first portion of the parallel excitation light directed toward the second mirror 3. The first mirror 2 transmits, for example, 88% of the parallel excitation light from the diffuser 13, and thereby generates the second portion of the parallel excitation light directed toward the third mirror 4.

Preferably, the second mirror 3 is a total reflection mirror or a dichroic mirror designed to reflect the excitation light. Thus, the second mirror 3 fully reflects the first portion of the parallel excitation light toward the lens set 14b.

The lens set 14b includes a front lens group and a rear lens group between which the diffuser 15 is located. Specifically, the front lens group and the rear lens group are opposed to each other while the diffuser 15 is located therebetween. The reflected excitation light from the second mirror 3 passes through the front lens group in the lens set 14 before reaching the diffuser 15. The front lens group focuses the reflected excitation light onto the diffuser 15. A motor 19b rotates the diffuser 15 about its axis at a speed of, for example, 7200 rpm.

The focused excitation light passes through the diffuser 15 while being diffused thereby. The diffused excitation light from the diffuser 15 passes through the rear lens group in the lens set 14b while being converted or collimated thereby into a parallel blue (B) light beam. The blue light beam from the lens set 14b is incident to a fourth mirror 6 forming a combining optical system.

In this way, a portion of the excitation light emitted from the LDs 1 is used as a blue light beam. The excitation light emitted from the LDs 1 tends to have mutual interference which would cause a speckle in an image projected onto a projector screen. Rotation of the diffuser 15 at a high speed reduces such a speckle.

The third mirror 4 transmits a portion of the parallel excitation light from the first mirror 2, and thereby generates transmitted excitation light directed toward the fluorescent member 5g. The third mirror 4 reflects another portion of the parallel excitation light from the first mirror 2, and thereby generates reflected excitation light directed toward the fluorescent member 5r.

A second lens 7g is located between the third mirror 4 and the fluorescent member 5g in a direction of travel of light. The transmitted excitation light from the third mirror 4 passes through the second lens 7g before reaching the fluorescent member 5g. The second lens 7f focuses the transmitted excitation light onto the fluorescent member 5g.

A circular substrate 8g made of metal or glass has a major surface coated with a highly-efficient reflective film. The fluorescent member 5g is formed by a layer securely superposed on the reflective film on the substrate 8g. Preferably, during manufacture, a mixture of base material for the fluorescent member 5g and adhesive dispersant is applied to the reflective film before the fluorescent member 5g is formed thereon. A motor 9g rotates the substrate 8g about its axis at a speed of, for example, 7200 rpm. The fluorescent member 5g is excited by the excitation light focused thereon, and thereby emits a fluorescent light beam that is a green (G) light beam toward the second lens 7g.

The green light beam from the fluorescent member 5g is incident to the second lens 7g, and passes therethrough while being converted into a parallel green light beam. Then, the parallel green light beam from the second lens 7g is incident to the third mirror 4. The parallel green light beam is reflected by the third mirror 4 toward the fourth mirror 6 before being incident to the fourth mirror 6.

A third lens 7r is located between the third mirror 4 and the fluorescent member 5r in a direction of travel of light. The reflected excitation light from the third mirror 4 passes through the third lens 7r before reaching the fluorescent member 5r. The third lens 7r focuses the reflected excitation light onto the fluorescent member 5r.

A circular substrate 8r made of metal or glass has a major surface coated with a highly-efficient reflective film. The fluorescent member 5r is formed by a layer securely superposed on the reflective film on the substrate 8r. Preferably, during manufacture, a mixture of base material for the fluorescent member 5r and adhesive dispersant is applied to the reflective film before the fluorescent member 5r is formed thereon. A motor 9r rotates the substrate 8r about its axis at a speed of, for example, 7200 rpm. The fluorescent member 5r is excited by the excitation light focused thereon, and thereby emits a fluorescent light beam that is a red (R) light beam toward the third lens 7r.

The red light beam from the fluorescent member 5r is incident to the third lens 7r, and passes therethrough while being converted into a parallel red light beam. Then, the parallel red light beam from the third lens 7r is incident to the third mirror 4 before being transmitted therethrough. Then, the transmitted red light beam travels from the third mirror 4 to the fourth mirror 6.

The fourth mirror 6 has a reflectance depending on the wavelength of incident light. The fourth mirror 6 fully reflects the blue light beam from the lens set 14b while fully transmits the red light beam and the green light beam from the third mirror 4. The fourth mirror 6 combines the red, green, and blue light beams into a composite light beam which is a collimated or parallel white light beam. The fourth mirror 6 has an incident surface and an exit surface (an input surface and an output surface). The composite light beam leaves the exit surface of the fourth mirror 6. In this way, the composite light beam is outputted from the fourth mirror 6. The composite light beam has a prescribed chromaticity range and a good white balance.

The rear lens group in the lens set 14b, the lenses 7g and 7r, the mirror 4, the diffuser 15, and the fluorescent members 5g and 5r are located and arranged so that the lengths of optical paths between the exit surface of the fourth mirror 6 (the combining optical system) and the light emission points on the diffuser 15 and the fluorescent members 5g and 5r will be equal to each other. The rear lens group in the lens set 14b, and the lenses 7g and 7r are of the same structure. Thus, the conjugate lengths (points) for the blue, green, and red light beams are equal to each other. Therefore, concerning the blue, green, and red light beams, not only the optical path lengths but also the angular distributions are equal to each other. Accordingly, the color balance can be properly maintained.

The composite light beam travels from the fourth mirror 6 to an afocal lens system 10. The composite light beam is increased in cross-sectional diameter by the afocal lens system 10 before being incident to a spatial light modulator or modulators in a projector (not shown in Fig. 5).

The light source device of Fig. 5 reproduces blue (B) from a portion of the excitation light without using fluorescence. Specifically, the diffuser 15 is used for blue reproduction instead of the fluorescent member 5b (see Fig. 1).

The split portions of the excitation light are focused into spots on the diffuser 15 and the fluorescent members 5g and 5r, respectively. Preferably, the diameters of these spots are substantially or exactly equal. As previously mentioned, the conjugate lengths (points) for the blue, green, and red light beams are equal to each other. The equal spot diameters and the equal conjugate lengths make it possible that not only entrance pupils but also exit pupils of an illumination and projection optical system in the projector receiving the composite light beam from the light source device of Fig. 5 for red, green, and blue are equal to or coincident with each other.

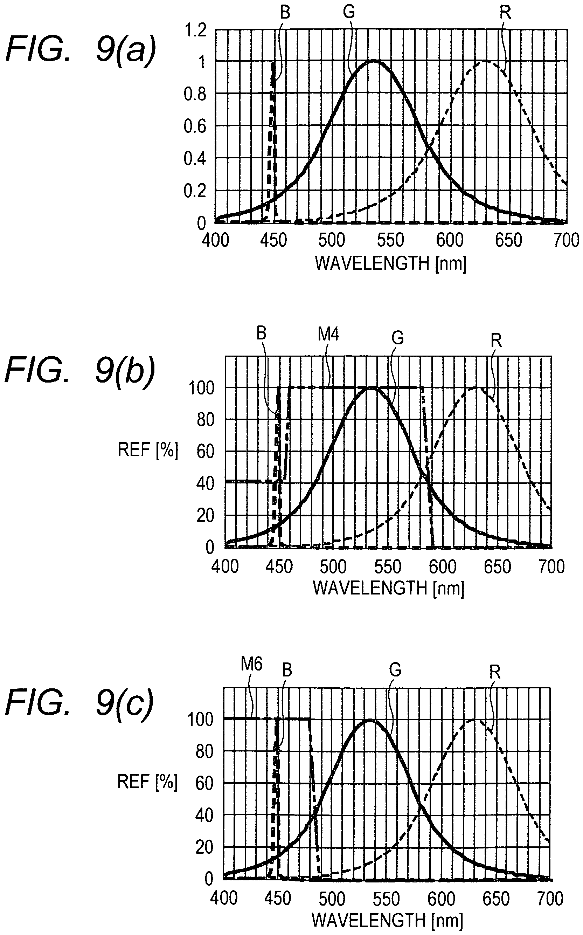

With reference to Fig. 9(a), the blue light beam leaving the diffuser 15 has a spectrum "B" while the green and red light beams emitted form the fluorescent members 5g and 5r have spectrums "G" and "R" respectively. In Fig. 9(a), the intensities of the blue, green, and red light beams are normalized so that their peaks will be equal to "1.0".

As shown in Fig. 9(b), the third mirror 4 has a reflectance M4 that depends on the wavelength of incident light.

As shown in Fig. 9(c), the fourth mirror 6 has a reflectance M6 that depends on the wavelength of incident light.

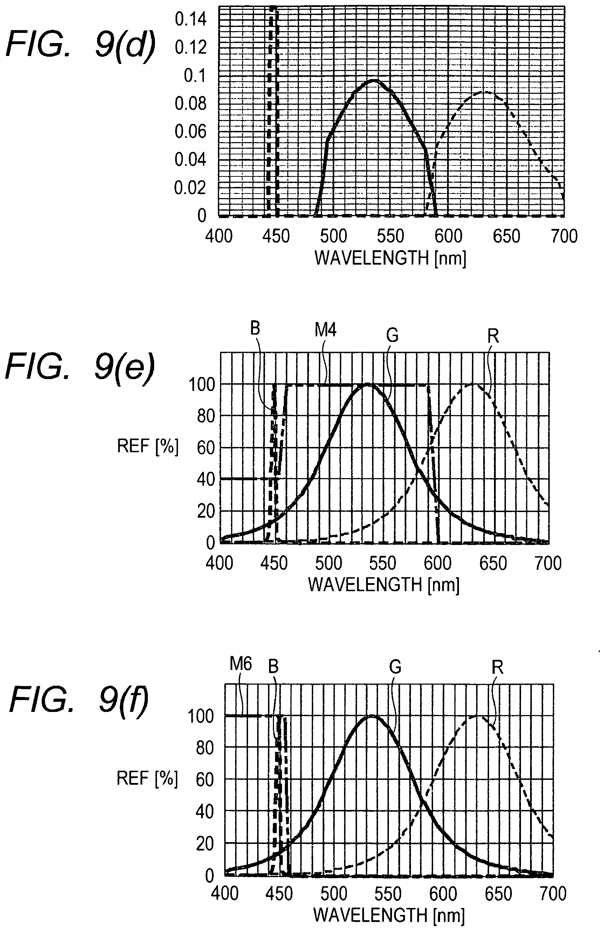

As shown in Fig. 9(d), the composite light beam exiting the light source device of Fig. 5 has a spectral energy distribution where energy concentrates in three wavelength ranges corresponding to R, G, and B respectively.

In the light source device of Fig. 5, a portion of the excitation light is used as the blue light beam without utilizing fluorescent. On the other hand, the green and red light beams are generated from portions of the excitation light via fluorescence. The excitation light is guided from the LDs 1 to the first mirror 2. A portion of the excitation light is reflected by the first mirror 2 while another portion thereof is transmitted through the first mirror 2. The reflected excitation light travels from the first mirror 2 to the second mirror 3. The excitation light is reflected by the second mirror 3 before being incident to the diffuser 15 via the front lens group in the lens set 14b. The excitation light passes through the diffuser 15 while being diffused thereby. The diffused excitation light forms the blue light beam that travels from the diffuser 15 to the fourth mirror 6 via the rear lens group in the lens set 14b. The rear lens group converts the incident blue light beam into a parallel blue light beam. The parallel blue light beam is reflected by the fourth mirror 6 toward the afocal lens system 10.

Meanwhile, the transmitted excitation light travels from the first mirror 2 to the third mirror 4. A portion of the excitation light is transmitted through the third mirror 4 while another portion thereof is reflected by the third mirror 4. The transmitted excitation light travels from the third mirror 4 to the fluorescent member 5g while being focused thereon by the lens 7g. The green light beam is generated by the fluorescent member 5g in response to the focused excitation light. The green light beam travels from the fluorescent member 5g to the third mirror 4 via the lens 7g. The lens 7g converts the incident green light beam into a parallel green light beam. The parallel green light beam is reflected by the third mirror 4 before being incident to the fourth mirror 6. The parallel green light beam passes through the fourth mirror 6 before reaching the afocal lens system 10.

The excitation light reflected by the third mirror 4 travels to the fluorescent member 5r while being focused thereon by the lens 7r. The red light beam is generated by the fluorescent member 5r in response to the focused excitation light. The red light beam travels from the fluorescent member 5r to the third mirror 4 via the lens 7r. The lens 7r converts the incident red light beam into a parallel red light beam. The parallel red light beam passes through the third mirror 4 before being incident to the fourth mirror 6. The parallel red light beam passes through the fourth mirror 6 before reaching the afocal lens system 10.

At the exit surface of the third mirror 4, the green and red light beams join in. At the exit surface of the fourth mirror 6, the blue, green, and red light beams join in to form the composite light beam which is a white light beam.

### Third Embodiment

A third embodiment of this invention is similar to the second embodiment thereof except for the characteristics of the third mirror 4 and the fourth mirror 6.

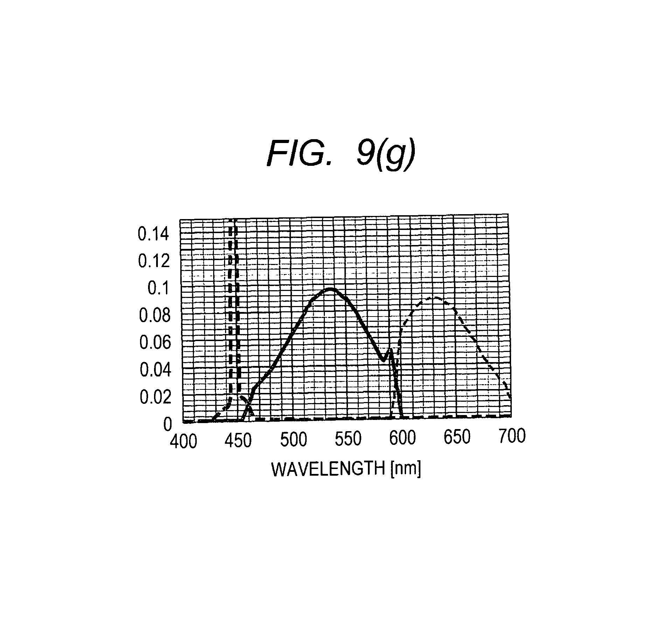

In the third embodiment of this invention, the reflectance M4 of the third mirror 4 depends on the wavelength of incident light as shown in Fig. 9(e). The reflectance M6 of the fourth mirror 6 depends on the wavelength of incident light as shown in Fig. 9(f). The composite light beam exiting the light source device has a spectral energy distribution shown in Fig. 9(g). The reflectances M4 and M6 of the third and fourth mirrors 4 and 6 are designed so that a short-wavelength (blue) portion of the green light beam emitted from the fluorescent member 5g will be used as a part of the blue light beam.

In the second embodiment of this invention, the blue light in the composite light beam is formed only by a portion of the excitation light having a wavelength centered at 450 nm. Thus, the chromaticity point of the blue light deviates from an ideal point in rightward and downward directions as shown in Fig. 3(c). The blue light is high in color purity. The color of the blue light is close to purple.

In the third embodiment of this invention, the characteristics of the third mirror 4 are chosen so that the wavelength at which the reflectance M4 thereof changes stepwise between 40% and 100% is in close vicinity to the wavelength of the excitation light as shown in Fig. 9(e). Similarly, the characteristics of the fourth mirror 6 are chosen so that the wavelength at which the reflectance M6 thereof changes stepwise between 0% and 100% is in close vicinity to the wavelength of the excitation light as shown in Fig. 9(f).

Specifically, the third mirror 4 is designed so that a half-value wavelength is equal to 455 nm. Similarly, the fourth mirror 6 is designed so that a half-value wavelength is equal to 455 nm. Accordingly, a greater amount of short-wavelength components of the green light is reflected by the third mirror 4, and a greater amount of short-wavelength components of the green light passes through the fourth mirror 6. Thus, a greater amount of short-wavelength components of the green light emitted from the fluorescent member 5g is used as a part of the blue light in the composite light beam. As a result, the chromaticity point of the blue light moves leftward and upward to a position corresponding to a wavelength of 460 nm.

In addition to a portion of the excitation light, the blue components of the green light emitted from the fluorescent member 5g are used as a part of the blue light in the composite light beam. Therefore, the amount of the blue light is increased. Furthermore, the chromaticity point of the blue light can be adjusted.

The half-value wavelength regarding each of the mirrors 4 and 6 may be in the range between 450 nm and a prescribed wavelength corresponding to the longest limit of a blue range desired to be used for the green light emitted from the fluorescent member 5g. For example, the half-value wavelength may be in the range between 450 nm and 470 nm.

### Fourth Embodiment

Fig. 10 shows a projector according to a fourth embodiment of this invention. The projector of Fig. 10 includes the light source device in the second or third embodiment of this invention.

The collimated white light beam exiting the light source device is reflected by a mirror 16 before successively passing through a first integrator 17, a second integrator 18, and a PCS (polarization conversion system) 19. The integrators 17 and 18 make uniform a brightness distribution in cross section of the white light beam. The PCS 19 converts the white light beam into a linearly-polarized light beam.

The linearly-polarized light beam travels from the PCS 19 to a dichroic mirror 20, and is split thereby into a yellow light beam and a blue light beam. The yellow light beam from the dichroic mirror 20 is reflected by a mirror 21 before being split by a dichroic mirror 22 into a red light beam and a green light beam.

Then, the red light beam passes through a wire grid 23 before illuminating a spatial light modulator 24r for red. The green light beam passes through a wire grid 25 before illuminating a spatial light modulator 24g for green. The blue light beam from the dichroic mirror 20 is reflected by a mirror 26 before passing through a wire grid 27 and then illuminating a spatial light modulator 24b for blue.

The spatial light modulators 24r, 24g, and 24b modulate the red, green, and blue illumination light beams in accordance with a video signal while reflecting them back toward the wire grids 23, 25, and 27 as modulation-result red, green, and blue light beams. The modulation-result red light beam is reflected by the wire grid 23 before being incident to a cross prism 28 along a first direction. The modulation-result green light beam is reflected by the wire grid 25 before being incident to the cross prism 28 along a second direction different from the first direction. The modulation-result blue light beam is reflected by the wire grid 27 before being incident to the cross prism 28 along a third direction different from the first and second directions.

The modulation-result red, green, and blue light beams are combined into a modulation-result composite light beam by the cross prism 28. The modulation-result composite light beam travels from the cross prism 28 to a projection lens 29. The modulation-result composite light beam passes through the projection lens 29, and forms an image on a screen 30 which is represented by the video signal.

On the second integrator 18, there are formed images of the spots on the diffuser 15 and the fluorescent members 5r and 5g into which the portions of the excitation light from the array of the LDs 1 are focused respectively. The equal conjugate lengths (points) for the blue, green, and red light beams in the light source device prevent the spot images on the second integrator 18 from becoming fuzzy. Therefore, it is possible to prevent the occurrence of a decrease in light use efficiency and a variation in brightness among red, green, and blue.

The spatial light modulators 24r, 24g, and 24b are of the reflection type. The spatial light modulators 24r, 24g, and 24b include, for example, liquid crystal devices of the reflection type. The spatial light modulators 24r, 24g, and 24b may be of the transmission type. The spatial light modulators 24r, 24g, and 24b may include, for example, liquid crystal devices of the transmission type.

## Claims

1. A light source device comprising:
excitation light sources integrated into a module and each emitting excitation light;
a beam splitter optical system splitting the excitation light from the excitation light sources into first, second, and third portions at a prescribed split ratio;
a first fluorescent member emitting red light in response to the first portion of the excitation light from the beam splitter optical system through fluorescence;
a second fluorescent member emitting green light in response to the second portion of the excitation light from the beam splitter optical system through fluorescence;
a third fluorescent member emitting blue light in response to the third portion of the excitation light from the beam splitter optical system through fluorescence; and
a combining optical system combining the red light, the green light, and the blue light from the first, second, and third fluorescent members.

2. A light source device as recited in claim 1, wherein the lengths of optical paths between an exit of the combining optical system and the first, second, and third fluorescent members are equal to each other.

3. A light source device comprising:
excitation light sources integrated into a module and each emitting excitation light having a blue color;
a beam splitter optical system splitting the excitation light from the excitation light sources into first, second, and third portions at a prescribed split ratio;
a first fluorescent member emitting red light in response to the first portion of the excitation light from the beam splitter optical system through fluorescence;
a second fluorescent member emitting green light in response to the second portion of the excitation light from the beam splitter optical system through fluorescence;
a diffuser diffusing and transmitting the third portion of the excitation light from the beam splitter optical system to output blue light; and
a combining optical system combining the red light and the green light from the first and second fluorescent members, and the blue light from the diffuser.

4. A light source device as recited in claim 3, wherein the combining optical system adds blue components of light emitted from the second fluorescent member to the combining-resultant light.

5. A projector comprising:
at least one spatial light modulator; and
a light source device illuminating the spatial light modulator;
wherein the light source device comprises excitation light sources integrated into a module and each emitting excitation light having a blue color; a beam splitter optical system splitting the excitation light from the excitation light sources into first, second, and third portions at a prescribed split ratio; a first fluorescent member emitting red light in response to the first portion of the excitation light from the beam splitter optical system through fluorescence; a second fluorescent member emitting green light in response to the second portion of the excitation light from the beam splitter optical system through fluorescence; a diffuser diffusing and transmitting the third portion of the excitation light from the beam splitter optical system to output blue light; and a combining optical system combining the red light and the green light from the first and second fluorescent members, and the blue light from the diffuser.
